# EUROPÄISCHE PATENTSCHRIFT

(11) **EP 0 786 852 B1**
(45) Veröffentlichungstag und Bekanntmachung des Hinweises auf die Patenterteilung: **20.09.2000**
(21) Anmeldenummer: 97100423.9
(22) Anmeldetag: 13.01.1997
(51) Int. Cl.: H02K 7/10, H02K 7/102, F16D 59/02

(54) **Elektrischer Antrieb**
Electric drive
Entraînement électrique

(30) Priorität: 24.01.1996 DE 19602469
(43) Veröffentlichungstag der Anmeldung: 30.07.1997
(73) Patentinhaber: SIEMENS AKTIENGESELLSCHAFT, 80333 München (DE)
(72) Erfinder: Auernhammer, Erich, Dipl.-Ing. (FH), 90409 Nürnberg (DE)

(56) Entgegenhaltungen:
- EP-A- 0 606 594
- DE-C- 3 805 705
- DE-U- 7 704 543
- FR-A- 2 505 573
- GB-A- 2 044 867

## Beschreibung

Die Erfindung betrifft einen elektrischen Antrieb gemäß dem Oberbegriff des Anspruches 1.

Ein solcher Antrieb ist durch das DE-U-77 04 543 bekannt. Bei diesem bekannten Antrieb ist zur Baulängenverkürzung des Antriebes und zum Freihalten der einen Motorseite für den Anbau von elektrischen Gebergeräten eine elektromagnetisch lüftbare Federdruckbremse zwischen der betreffenden Motorstirnseite und einem auf dieser Stirnseite mit der Motorwelle gekoppelten Abtriebselement angeordnet. Die Federdruckbremse ist mit ihrem stationären Teil an der betreffenden Stirnseite des Motorgehäuses befestigt. Durch das Zwischenfügen der Federdruckbremse zwischen das Motorgehäuse und das Abtriebselement ergibt sich immer noch eine gewisse Vergrößerung der Baulänge des Antriebes.

Der Erfindung liegt die Aufgabe zugrunde einen Antrieb der eingangs beschriebenen Art so weiter zu bilden, daß die axiale Baulänge des Antriebes möglichst nicht größer als die axiale Baulänge des Elektromotors ist.

Die Lösung dieser Aufgabe gelingt gemäß der Erfindung durch im Kennzeichen des Anspruches 1 angegebenen Merkmale. Infolge der axialen Überlappung von Federdruckbremse und Abtriebselement wird kein zusätzlicher Zwischenraum zwischen der Motorstirnseite und dem Abtriebselement für die Unterbringung der Federdruckbremse benötigt. Es besteht somit die Möglichkeit den Antrieb mit einer axialen Baulänge auszuführen, die der axialen Baulänge des Elektromotors von seinem antriebseitigen Wellenende bis zu der gegenüberliegenden Motorseite entspricht. Damit kann der Elektromotor unabhängig davon, ob eine Federdruckbremse angebaut wird oder nicht, stets mit den gleichen Abmessungen ausgeführt werden.

Die Koppelung zwischen der Bremsscheibe und der Motorwelle gelingt auf konstruktiv einfache Weise dadurch, daß das Abtriebselement eine auf das Wellenende aufsteckbare Nabenhülse aufweist, an deren Außenumfang die Bremsscheibe mittels einer Aufnahmebohrung aufsteckbar ist.

Die drehfeste, jedoch axial bewegliche Verbindung zwischen der Bremsscheibe und dem Abtriebselement kann mittels einer zwischen der Nabenhülse des Abtriebselementes und der aufgesteckten Bremsscheibe eingefügten Paßfeder erreicht werden oder auch dadurch, daß am Außenumfang der Nabenhülse und am Innenumfang der Aufnahmebohrung wechselseitig jeweils mindestens eine ineinanderpassende Nut und Leiste vorgesehen ist.

Ist als Abtriebselement eine Riemenscheibe auf dem Wellenende angeordnet, dann kann die axiale Überlappung zwischen der Federdruckbremse und dem Abtriebselement dadurch erreicht werden, daß die Riemenscheibe auf der der Motorstirnseite zugewandten Seite einen ringförmigen Hohlraum aufweist, in den die Federdruckbremse zumindest teilweise hineinragt.

Dadurch, daß an einer sich radial erstreckenden, den Hohlraum der Riemenscheibe axial begrenzenden Wand eine Bremsfläche vorgesehen ist, gegen die die Ankerscheibe der Federdruckbremse preßbar ist, erübrigt sich das Vorsehen eines die Bremsfläche aufweisenden gesonderten Elementes.

Eine doppelseitig wirkende Federdruckbremse ergibt sich dadurch, daß die Federdruckbremse auf der der Ankerscheibe gegenüber liegenden Seite einen vom feststehenden Teil der Federdruckbremse getragenen, gegenüber der Ankerscheibe axial beabstandeten Bremsring aufweist und daß eine direkt oder indirekt mit der Motorwelle gekuppelte Bremsscheibe vorgesehen ist, die zwischen die Ankerscheibe und den Bremsring ragt.

Anhand eines in der Zeichnung dargestellten Ausführungsbeispieles wird die Erfindung nachfolgend noch näher erläutert.

Es zeigt:

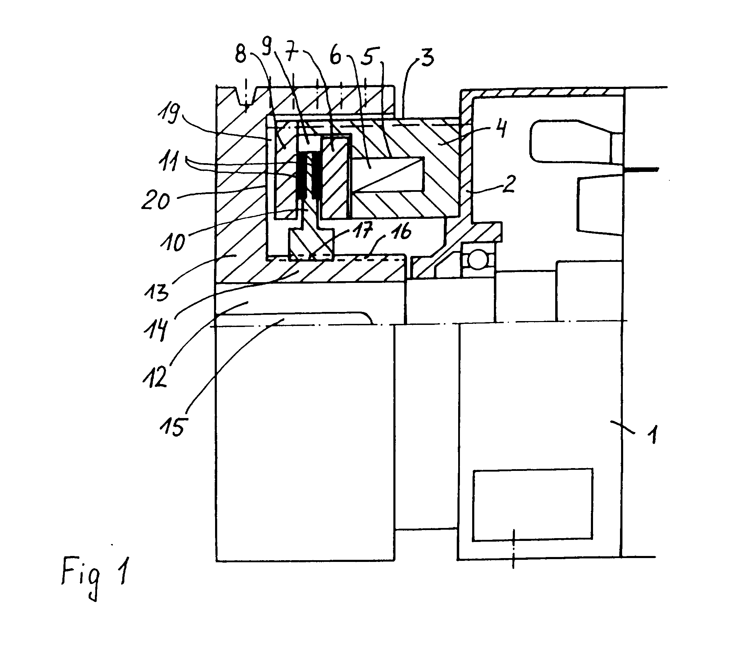

- FIG 1: einen Antrieb mit einer Riemenscheibe als Abtriebselement
- FIG 2: einen Antrieb mit einem als Kupplungsscheibe ausgebildeten Abtriebselement.

Mit 1 ist ein nur im Teilschnitt dargestellter Elektromotor bezeichnet, an dessen antriebseitigem Lagerschild 2 eine elektromagnetisch lüftbare Federdruckbremse 3 angebaut ist. Diese Federdruckbremse 3 weist in bekannter Weise einen ferromagnetischen Kern 4 mit einer Aufnahmenut 5 auf, in die eine Erregerspule 6 eingefügt ist. Vor der freien Stirnseite des Kernes 4 ist eine Ankerscheibe 7 axial beweglich angeordnet. Gegenüber der Ankerscheibe 7 axial beabstandet ist noch ein mit dem Kern 4 verbundener Bremsring 8 angeordnet. In dem Zwischenraum 9 zwischen der Ankerscheibe 7 und dem Bremsring 8 befindet sich eine Bremsscheibe 10, die an ihrem in den Zwischenraum 9 ragenden Teil beidseitig mit einem Bremsbelag 11 versehen ist. Bei dem dargestellten Ausführungsbeispiel erfolgt die axiale Verstellung der Ankerscheibe 7 durch einen Elektromagneten. Zur Verstellung der Ankerscheibe 7 kann aber auch ein hydraulischer oder pneumatischer Antrieb vorgesehen werden.

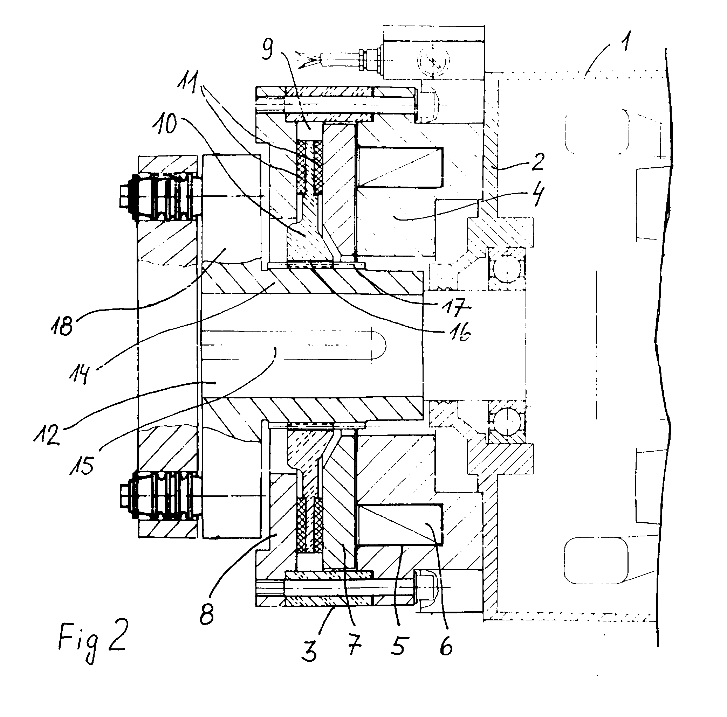

Als Abtriebselement ist auf dem Wellenende 12 des Motors 1 eine Riemenscheibe 13 angeordnet, die einen ringförmigen Hohlraum 19 aufweist. Anstelle einer Riemenscheibe kann auch eine Kupplungsscheibe 18, wie in FIG.2 gezeigt, oder auch ein Ritzel vorgesehen werden. Die Riemenscheibe 13 bzw. die Kupplungsscheibe 18 ist mittels einer an ihr angeformten Nabenhülse 14 auf das Wellenende 12 aufgesteckt und in entsprechender Weise mittels einer Paßfederverbindung 15 mit dem Wellenende 12 verbunden.

Die Bremscheibe 10 weist eine Aufnahmebohrung auf, mit der sie außen auf die Nabenhülse 14 der Riemenscheibe 13 bzw. der Kupplungscheibe 18 aufsteckbar ist. Am Außenumfang der Nabenhülse 14 ist mindestens eine Nut 16 und am Innenumfang der Aufnahmebohrung der Bremsscheibe 10 mindestens eine in die Nut 16 passende Leiste 17 vorgesehen. Es können auch über den gesamten Außenumfang der Nabenhülse 14 und den gesamten Innenumfang der Aufnahmebohrung verteilt Nuten 16 und Leisten 17 vorgesehen werden, wodurch die Belastung der einzelnen Nuten 16 und Leisten 17 reduziert wird. Bei dieser Gestaltung des Außenumfanges der Nabenhülse 14 und der Aufnahmebohrung wird gleichzeitig beim Aufstecken der Riemenscheibe 13 bzw. der Kupplungscheibe 18 auf das Wellenende 12 die gewünschte Koppelung zwischen der Riemenscheibe 13 bzw. der Kupplungsscheibe 18 und der Bremsscheibe 10 erreicht.

Die dargestellte Bremse 3 ist als sogenannte elektromagnetisch lüftbare Federdruckbremse ausgebildet. Bei einer solchen Bremse wird die Ankerscheibe 7 durch in der Zeichnung nicht dargestellte Federn gegen die Bremsscheibe 10 gedrückt, wodurch diese dann auch noch an dem Bremsring 8 zur Anlage kommt. Durch das beidseitige Andrücken der Bremsscheibe 10 wird eine sehr gute Bremswirkung erzielt. Wird die Erregerspule 6 an Spannung gelegt, so wird die Ankerscheibe 7 durch das von der Erregerspule 6 erzeugte Magnetfeld angezogen und die Bremse somit gelöst. Die Bremsscheibe 10 kann sich dann frei zwischen der Ankerscheibe 7 und dem Bremsring 8 drehen.

Es sind auch andere Ausführungsvarianten der Federdruckbremse 3 möglich. So kann beispielsweise die Ankerscheibe 7 auch die Funktion der Bremsscheibe 10 mit übernehmen. Die Ankerscheibe 7 kann in diesem Falle mit einer der Aufnahmebohrung der Bremsscheibe 10 entsprechenden Aufnahmebohrung versehen sein und in der gleichen Art, wie bei der Bremsscheibe 10 beschrieben, mit der Nabenhülse 14 gekoppelt werden. Die Ankerscheibe 7 kann gegen eine an der den Hohlraum 19 axial begrenzenden, sich radial ersteckenden Wand 20 vorgesehene Bremsfläche gepreßt werden.

Desgleichen sind auch noch weitere Ausführungsvarianten des Abtriebselementes möglich. So kann anstelle einer Riemenscheibe 13 bzw. einer Kupplungsscheibe 18 auch ein mit einer entsprechenden Nabenhülse versehenes Ritzel auf dem Wellenende 12 angeordnet werden.

## Patentansprüche

1. Elektrischer Antrieb, der einen Elektromotor (1) mit einer lüftbaren Federdruckbremse (3) aufweist, die zwischen der einen Stirnseite des Motors (1) und einem auf dieser Stirnseite mit dem Wellenende (12) des Motors (1) gekupppelten Abtriebselement (13 bzw. 18) angeordnet und an der betreffenden Motorstirnseite befestigt ist, bei welcher Bremse (3) eine axial verstellbare Ankerscheibe (7) durch Federkraft gegen eine an einem mit der Motorwelle drehfest gekoppelten Element (10) vorgesehene Bremsfläche (11) preßbar ist,
**dadurch gekennzeichnet**,
daß sich die Federdruckbremse (3) und das Abtriebselement (13 bzw. 18) in axialer Richtung zumindest teilweise überlappen.

2. Antrieb nach Anspruch 1,
**dadurch gekennzeichnet**,
daß das Abtriebselement (13 bzw. 18) eine auf das Wellenende (12) aufsteckbare Nabenhülse (14) aufweist, an deren Außenumfang die Bremsscheibe (10) mittels einer Aufnahmebohrung aufsteckbar ist.

3. Antrieb nach Anspruch 2,
**dadurch gekennzeichnet**,
daß die Bremsscheibe (10) mittels einer Paßfeder axial beweglich und drehfest mit der Nabenhülse (14) verbunden ist.

4. Antrieb nach Anspruch 2,
**dadurch gekennzeichnet**,
daß am Außenumfang der Nabenhülse (14) und am Innenumfang der Aufnahmebohrung wechselseitig jeweils mindestens eine ineinanderpassende Nut (16) und Leiste (17) vorgesehen ist.

5. Antrieb nach einem der vorhergenden Ansprüche,
**dadurch gekennzeichnet**,
daß als Abtriebselement eine Riemenscheibe (13) vorgesehen ist, die auf der der Motorstirnseite zugewandten Seite einen ringförmigen Hohlraum (19) aufweist, in den die Federdruckbremse (3) zumindest teilweise hineinragt.

6. Elektromotor nach Anspruch 5,
**dadurch gekennzeichnet**,
daß an einer sich radial erstreckenden, den Hohlraum (19) der Riemenscheibe (13) axial begrenzenden Wand (20) eine Bremsfläche vorgesehen ist, gegen die die Ankerscheibe (7) der Federdruckbremse (3) preßbar ist.

7. Elektromotor nach einem der vorhergehenden Ansprüche,
**dadurch gekennzeichnet**,
daß die Federdruckbremse (3) auf der der Ankerscheibe (7) gegenüber liegenden Seite einen vom feststehenden Teil der Federdruck-bremse (3) getragenen, gegenüber der Ankerscheibe (7) axial beabstandeten Bremsring (8) aufweist und daß eine direkt oder indirekt mit der Motorwelle gekuppelte Bremsscheibe (10) vorgesehen ist, die zwischen die Ankerscheibe (7) und den Bremsring (8) ragt.

## Claims

1. Electric drive which has an electric motor (1) with a releasable spring-operated brake (3) which is arranged between the one end face of the motor (1) and a driven element (13 or 18 respectively), coupled at this end face to the shaft end (12) of the motor (1), and is secured to the respective motor end face and in which brake (3) an axially adjustable armature disc (7) can be pressed by spring force against a braking surface (11) that is provided on an element (10) coupled to the motor shaft in a rotationally secure manner, characterised in that the spring-operated brake (3) and the driven element (13 or 18 respectively) overlap at least in part in the axial direction.

2. Drive according to claim 1, characterised in that the driven element (13 or 18 respectively) has a hub sleeve (14) which can be slipped onto the shaft end (12) and onto the outer periphery of which the brake disc (10) can be slipped by means of a location hole.

3. Drive according to claim 2, characterised in that the brake disc (10) is connected to the hub sleeve (14) in an axially movable and rotationally secure manner by means of a feather key.

4. Drive according to claim 2, characterised in that at least one groove (16) and strip (17) fitting into one another are provided on the outer periphery of the hub sleeve (14) and on the inner periphery of the location hole in a reciprocal arrangement in each case.

5. Drive according to one of the preceding claims, characterised in that provided as the driven element there is a belt pulley (13) which, on the side facing the motor end face, has an annular hollow space (19) into which the spring-operated brake (3) projects at least in part.

6. Electric motor according to claim 5, characterised in that provided on a wall (20) which extends radially and axially delimits the hollow space (19) of the belt pulley (13) there is a braking surface against which the armature disc (7) of the spring-operated brake (3) can be pressed.

7. Electric motor according to one of the preceding claims, characterised in that the spring-operated brake (3) has, on the side lying opposite the armature disc (7), a brake ring (8) which is borne by the fixed portion of the spring-operated brake (3) and which is axially spaced apart from the armature disc (7), and in that a brake disc (10) is provided that is coupled directly or indirectly to the motor shaft and which projects between the armature disc (7) and the brake ring (8).

## Revendications

1. Entraînement électrique qui comporte un moteur (1) électrique ayant un frein (3) soumis à la pression d'un ressort et pouvant être alimenté en air, qui est interposé entre une face frontale du moteur (1) et un élément (13 et 18) mené couplé sur cette face frontale au bout (12) d'arbre du moteur et est fixé à la face frontale du moteur qui est concernée, frein (3) dans lequel un disque (7) pouvant être déplacé axialement et formant armature peut être poussé sur une surface (11) de frein prévue sur un élément (10) solidaire en rotation de l'arbre du moteur,
caractérisé en ce que le frein (3) soumis à la pression d'un ressort et l'élément (13 et 18) mené se chevauchent au moins partiellement dans la direction axiale.

2. Entraînement suivant la revendication 1,
caractérisé en ce que l'élément (13 et 18) mené comporte une douille (14) formant moyeu, qui peut être enfilée sur le bout (12) de l'arbre et sur le pourtour de laquelle le disque (10) de frein peut être enfilé au moyen d'un trou de réception.

3. Entraînement suivant la revendication 2,
caractérisé en ce que le disque (10) de frein est relié à la douille (14) formant moyeu, avec possibilité de mouvement axial et solidarité en rotation au moyen d'une clavette.

4. Entraînement suivant la revendication 2,
caractérisé en ce qu'il est prévu sur le pourtour extérieur de la douille (14) formant moyeu et sur le pourtour intérieur du trou de réception alternativement une mortaise (16) et un tenon (17) qui s'adaptent l'un à l'autre.

5. Entraînement suivant l'une des revendications précédentes,
caractérisé en ce qu'il est prévu comme élément mené une poulie (13) qui comporte du côté tourné vers la face frontale du moteur une cavité (19) annulaire dans laquelle pénètre au moins partiellement le frein (3) soumis à la pression d'un ressort.

6. Entraînement suivant la revendication 5,
caractérisé en ce qu'il est prévu sur une paroi (20) s'étendant radialement et délimitant axialement la cavité (19) de la poulie (13) une surface de frein sur laquelle le disque (7) formant armature du frein (3) soumis à la pression d'un ressort peut être appliqué.

7. Entraînement suivant l'une des revendications précédentes,
caractérisé en ce que le frein (3) soumis à la pression d'un ressort comporte du côté opposé au disque (7) formant armature un anneau (8) de frein porté par une partie fixe du frein (3) soumis à la pression d'un ressort et à distance axialement du disque (7) formant armature et en ce qu'il est prévu un disque (10) de frein couplé directement ou indirectement à l'arbre du moteur et faisant saillie entre le disque (7) formant armature et l'anneau (8) de frein.
